# EUROPÄISCHE PATENTSCHRIFT

(11) **EP 3 556 644 B1**
(45) Veröffentlichungstag und Bekanntmachung des Hinweises auf die Patenterteilung: **17.11.2021**
(21) Anmeldenummer: 18168128.9
(22) Anmeldetag: 19.04.2018
(51) Int. Cl.: B62M 3/00, B62M 6/50, B62J 45/411

(54) **VERZAHNUNG FÜR TRETLAGER**
TOOTHING FOR GEAR CRANK
DENTURE POUR PALIER DE PÉDALIER

(43) Veröffentlichungstag der Anmeldung: 23.10.2019
(73) Patentinhaber: NCTE AG, 82041 Oberhaching (DE)
(72) Erfinder: Sedlmeier, Nikolaus, 85716 Unterschleißheim (DE); Mutz, Robert, 82031 Grünwald (DE); Merold, Franz, 82064 Straßlach (DE)
(74) Vertreter: Grünecker Patent- und Rechtsanwälte PartG mbB

(56) Entgegenhaltungen:
- EP-A1- 2 995 544
- DE-A1-102013 209 262
- JP-A- 2000 053 069
- US-A1- 2013 024 137

## Beschreibung

### Gebiet der Erfindung

Die Erfindung offenbart eine Tretlagerhülse für ein Drehmomentsensor-Tretlager und ein Drehmomentsensor-Tretlager mit einer Tretlagerhülse und einer Tretlagerwelle.

### Stand der Technik

In der Druckschrift EP 2 365 927 B1 wird ein Tretlager mit Drehmomentmessung offenbart. Das Tretlager weist eine Welle auf, an der die Tretkurbeln befestigt werden, sowie eine Kettenblattwelle mit einer Magnetisierung und einem Magnetfeldsensor zur Erfassung der Änderung der Magnetisierung im Betrieb. Die Kettenblattwelle und die Welle sind über eine ungefähr mittig an der Welle angeordneten Schraubverbindung miteinander verbunden.

Diese Verbindung ist jedoch beispielsweise aufgrund einer Mindestmaterialstärke der Kettenblattwelle mit dem Nachteil eines relativ großen Abstands zwischen der Tretkurbel und der Kettenblattwelle verbunden. Der Bauraum für ein standardisiertes Tretlager ist jedoch vorgegeben, so dass wenig Platz für das Anordnen von Magnetfeldsensoren und zugehöriger Elektronik verbleibt. Zudem ist die Montage des Tretlagers aufgrund der Schaubverbindung zeitaufwändig und muss mit einem vorbestimmten Anzugsmoment erfolgen, um eine drehfeste Verbindung zu erzielen.

Die gattungsgemäße JP2000-53069 und die DE 210 2013 209262 A1 zeigen jeweils einen Kurbeltrieb mit Drehmomentmessung.

### Beschreibung der Erfindung

Der Erfindung liegt die Aufgabe zugrunde, die genannten Nachteile zumindest teilweise auszuräumen.

Die genannte Aufgabe wird durch eine Tretlagerhülse für ein Drehmomentsensor-Tretlager nach Anspruch 1 gelöst.

Die erfindungsgemäße Tretlagerhülse für ein Drehmomentsensor-Tretlager umfasst eine Hohlwelle und die Tretlagerhülse ist an einem ersten axialen Endbereich der Hohlwelle mit einer Abtriebseinrichtung, insbesondere einem Kettenblattträger, koppelbar; wobei die Hohlwelle an einem zweiten axialen Endbereich stirnseitige Zähne aufweist, die zum Eingriff mit Nuten einer Tretlagerwelle vorgesehen sind; und wobei die Hohlwelle zwischen dem ersten und dem zweiten axialen Endbereich wenigstens einen magnetisierten Bereich aufweist.

Die stirnseitigen Zähne der Tretlagerhülse ermöglichen eine stirnseitige Verzahnung mit einer entsprechend komplementär dazu ausgebildeten Tretlagerwelle. Die stirnseitige Verzahnung ermöglicht eine Kopplung in axialer Richtung, indem die Tretlagerhülse auf die Welle aufgeschoben wird und die in axialer Richtung ausgebildeten Zähne der Tretlagerhülse in axial ausgebildete Nuten eines Absatzes mit vergrößertem Durchmesser der Tretlagerwelle eingreifen. Durch die stirnseitige Verzahnung geht in radialer Richtung kein Bauraum zur Befestigung der Tretlagerhülse an der Tretlagerwelle verloren. Insbesondere kann der radiale Zwischenraum zwischen der Tretlagerwelle und der Hohlwelle der Tretlagerhülse minimiert werden (beispielsweise 1 mm oder weniger). Es ist dabei lediglich erforderlich, dass über die Tretkurbeln auf die Tretlagerwelle ausgeübten Momente nur über die Verzahnung auf die Tretlagerhülse übertragen werden.

Die erfindungsgemäße Tretlagerhülse ist für die Gesamtdrehmomenterfassung von beiden Seiten einer Tretlagerwelle in einem Drehmomentsensor-Tretlager geeignet, also für die Erfassung der Summe des Drehmoments von der linken und von der rechten Tretkurbel.

Gemäß einer Weiterbildung der erfindungsgemäßen Tretlagerhülse sind die Zähne in axialer Richtung der Hohlwelle ausgebildet, insbesondere über eine gesamte Wandstärke der Hohlwelle an dem zweiten axialen Endbereich des Hohlzylinders.

In einer bevorzugten Weiterbildung sind die Zähne mit einem gleichmäßigen Winkelabstand in Umfangsrichtung an der Stirnseite des Hohlzylinders ausgebildet.

Eine andere Weiterbildung besteht darin, dass jeder der Zähne der Tretlagerhülse einen abgerundeten Zahnfuß und/oder einen abgerundeten Zahnkopf aufweist.

Gemäß einer anderen Weiterbildung weist jeder der Zähne Zahnseiten auf, die wenigstens teilweise parallel verlaufen.

Eine andere Weiterbildung besteht darin, dass der wenigstens eine magnetisierte Bereich der Hohlwelle in Umfangsrichtung magnetisiert ist, wobei vorzugsweise zwei magnetisierte Bereiche vorgesehen sind, die in zueinander gegenläufiger Umfangsrichtung magnetisiert sind.

Gemäß einer anderen Weiterbildung umfasst die Tretlagerhülse weiterhin eine Tretlagerabdeckung, die die Tretlagerhülse wenigstens teilweise umschließt und die für jeden magnetisierten Bereich wenigstens einen Magnetfeldsensor umfasst, mit dem eine durch ein an der Tretlagerhülse anliegendes Drehmoment bewirkte Magnetfeldänderung beabstandet vom jeweiligen magnetisierten Bereich der Hohlwelle erfasst werden kann.

Die kann dahingehend weitergebildet werden, dass der wenigstens eine Magnetfeldsensor an einer Innenseite des Tretlagergehäuses angeordnet ist.

Die genannte Aufgabe wird zudem durch ein Drehmomentsensor-Tretlager nach Anspruch 8 gelöst.

Das erfindungsgemäße Drehmomentsensor-Tretlager umfasst eine erfindungsgemäße Tretlagerhülse oder eine deren oben genannten Weiterbildungen; und eine Tretlagerwelle, umfassend einen ersten axialen Endbereich zur Befestigung einer ersten Tretkurbel und einen zweiten axialen Endbereich zur Befestigung einer zweiten Tretkurbel; und einen um eine Drehachse der Tretlagerwelle umlaufenden Wellenabsatz mit erhöhtem Durchmesser und darin vorgesehenen Nuten in axialer Richtung; wobei die Zähne der Tretlagerhülse in die Nuten der Tretlagerwelle eingreifen.

Eine Weiterbildung besteht darin, dass die Nuten in einer radialen Richtung über den gesamten Wellenabsatz ausgebildet sind.

In einer Weiterbildung sind die Nuten in Umfangsrichtung der Tretlagerwelle bzw. des Wellenabsatzes mit einem gleichmäßigen Winkelabstand zueinander ausgebildet.

Gemäß einer anderen Weiterbildung weist jede der Nuten Nutseiten auf, die wenigstens teilweise parallel verlaufen.

Die Anzahl der Zähne der Tretlagerhülse ist vorzugsweise gleich der Anzahl der Nuten der Tretlagerwelle.

Das erfindungsgemäße Drehmomentsensor-Tretlager kann dahingehend weitergebildet werden, dass jede Nut der Tretlagerwelle und jeder Zahn der Tretlagerhülse wenigstens teilweise komplementär zueinander ausgebildet sind.

Gemäß einer anderen Weiterbildung sind die Zähne der Tretlagerhülse und die Nuten der Tretlagerwelle so ausgebildet, dass ein axialer Kontakt der Zähne und Nuten an Zahnfüßen der Messhülse erfolgt.

Eine andere Weiterbildung besteht darin, dass eine axiale Länge der Zähne der Tretlagerhülse kleiner ist als eine axiale Tiefe der Nuten der Tretlagerwelle. Auf diese Weise wird eine Doppelpassung vermieden.

Gemäß einer anderen Weiterbildung ist eine Wandstärke der Hohlwelle der Tretlagerhülse an dem zweiten axialen Endbereich der Hohlwelle gleich einer radialen Höhe des Wellenabsatzes der Tretlagerwelle.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform der erfindungsgemäßen Tretlagerhülse.
- Fig. 2: zeigt eine Tretlagerwelle.
- Fig. 3: zeigt eine Ausführungsform des erfindungsgemäßen Drehmomentsensor-Tretlagers.
- Fig. 4: zeigt einen Ausschnitt aus Figur 3.

### Ausführungsformen

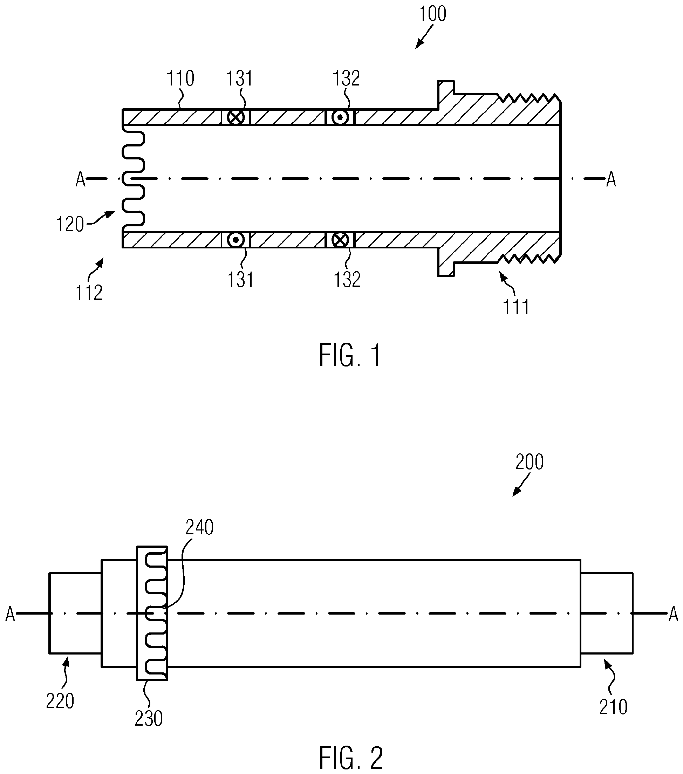

Figur 1 zeigt eine Ausführungsform der erfindungsgemäßen Tretlagerhülse 100.

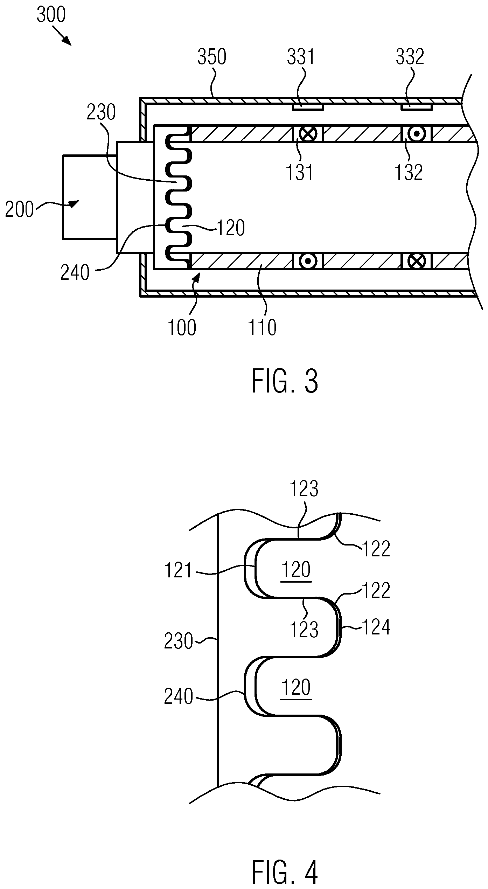

Die Tretlagerhülse 100 umfasst eine Hohlwelle 110. Die Tretlagerhülse 100 kann an einem ersten axialen Endbereich 111 der Hohlwelle mit einer Abtriebseinrichtung, beispielsweise einem Kettenblattträger bzw. einem Kettenblatt gekoppelt werden. Die Hohlwelle 110 weist an einem zweiten axialen Endbereich 112 stirnseitige Zähne 120 auf. Die Zähne 120 sind zum Eingriff mit Nuten einer Tretlagerwelle vorgesehen (siehe dazu Fig. 2 und 3). Die Hohlwelle weist zwischen dem ersten und dem zweiten axialen Endbereich 111, 112 zwei magnetisierte Bereiche 131, 132 auf, die zueinander gegenläufiger in Umfangsrichtung magnetisiert sind.

Die Zähne 120 sind in Umfangsrichtung (in Bezug auf die Drehachse A) mit einem gleichmäßigen Winkelabstand an der Stirnseite des Hohlzylinders 110 an dem zweiten axialen Endbereich 112 ausgebildet.

Die Zähne 120 sind in axialer Richtung der Hohlwelle 110 über eine gesamte Wandstärke der Hohlwelle 110 an dem zweiten axialen Endbereich 112 des Hohlzylinders 110 ausgebildet. Jeder der Zähne 120 der Tretlagerhülse 100 weist in dieser Ausführungsform einen abgerundeten Zahnkopf 121 und einen (beidseitig) abgerundeten Zahnfuß 122 auf. Zwischen den Zähnen 120 befinden sich Lücken 124. Jeder der Zähne weist beispielsweise ebene Zahnseitenabschnitte 123 auf, die parallel zueinander verlaufen. Dies ist in Figur 4 genauer dargestellt.

Figur 2 zeigt eine Tretlagerwelle 200.

Die Tretlagerwelle 200 umfasst einen ersten axialen Endbereich 210 zur Befestigung einer ersten Tretkurbel und einen zweiten axialen Endbereich 220 zur Befestigung einer zweiten Tretkurbel; und einen um eine Drehachse A der Tretlagerwelle 200 umlaufenden Wellenabsatz 230 mit erhöhtem Durchmesser und darin vorgesehenen Nuten 240 in axialer Richtung, die zum Eingriff mit den Zähnen 120 der Tretlagerhülse 100 vorgesehen ist.

Die Nuten 240 sind in Umfangsrichtung der Tretlagerwelle 200 bzw. des Wellenabsatzes 230 mit einem gleichmäßigen Winkelabstand zueinander ausgebildet.

Die Nuten 240 sind in einer radialen Richtung über den gesamten Wellenabsatz 230 ausgebildet. Jede der Nuten 240 kann beispielsweise ebene Nutseitenabschnitte 243 aufweisen, die parallel zueinander verlaufen.

Figur 3 zeigt eine Ausführungsform des erfindungsgemäßen Drehmomentsensor-Tretlagers 300.

Das erfindungsgemäße Drehmomentsensor-Tretlager 300 umfasst eine erfindungsgemäße Tretlagerhülse 100 gemäß der Ausführungsform nach Figur 1 und eine Tretlagerwelle 200 gemäß Figur 2. Die Zähne 120 der Tretlagerhülse 100 greifen in die Nuten 240 der Tretlagerwelle 200 ein.

Weiterhin umfasst das Drehmomentsensor-Tretlager 300 eine Tretlagerabdeckung 350, die die Tretlagerhülse 100 wenigstens teilweise umschließt und die für jeden magnetisierten Bereich 131, 132 wenigstens einen Magnetfeldsensor 331, 332 umfasst, mit dem eine durch ein an der Tretlagerhülse anliegendes Drehmoment bewirkte Magnetfeldänderung in einem Abstand vom jeweiligen magnetisierten Bereich 131, 132 der Hohlwelle 110 erfasst werden kann.

Die kann dahingehend weitergebildet werden, dass der wenigstens eine Magnetfeldsensor an einer Innenseite des Tretlagergehäuses angeordnet ist.

Jede Nut 240 der Tretlagerwelle 200 und jeder Zahn 120 der Tretlagerhülse 100 sind teilweise komplementär zueinander ausgebildet. Auf diese Weise ergibt sich eine zumindest teilweise formschlüssige Verbindung der Zähne 120 und der Nuten 240.

Um eine Doppelpassung zu vermeiden, sind die Zähne 120 der Tretlagerhülse 100 und die Nuten 240 der Tretlagerwelle 200 in dieser Ausführungsform so ausgebildet, dass ein axialer Kontakt der Zähne 120 und Nuten 240 an den Zahnfüßen 122 der Tretlagerhülse 100 erfolgt. Dazu ist die axiale Länge der Zähne 120 der Tretlagerhülse 100 kleiner als die axiale Tiefe der Nuten 240 der Tretlagerwelle 200. Dies ist in Figur 4 genauer dargestellt.

Alternativ dazu könnte der axiale Kontakt auch den Zahnköpfen 121 erfolgen, wenn die axiale Länge der Zähne 120 der Tretlagerhülse 100 größer als die axiale Tiefe der Nuten 240 der Tretlagerwelle 200 ist.

Die Wandstärke der Hohlwelle 110 der Tretlagerhülse 100 ist an dem zweiten axialen Endbereich 112 der Hohlwelle 110 gleich einer radialen Höhe des Wellenabsatzes 230 der Tretlagerwelle 200. Damit wird eine in radialer Richtung kompakte Bauweise bereitgestellt.

Die Anzahl der Zähne 120 (und entsprechend auch der Nuten 240) kann beispielsweise 12 betragen.

Figur 4 zeigt einen Ausschnitt aus Figur 3 mit Details der Verzahnung, insbesondere in Bezug auf die Form der Zähne 120 und der Nuten 240.

Die dargestellten Ausführungsformen sind lediglich beispielhaft und der vollständige Umfang der vorliegenden Erfindung wird durch die Ansprüche definiert.

## Patentansprüche

1. Tretlagerhülse (100) für ein Drehmomentsensor-Tretlager;
wobei die Tretlagerhülse eine Hohlwelle (110) umfasst und die Tretlagerhülse an einem ersten axialen Endbereich (111) der Hohlwelle mit einer Abtriebseinrichtung, insbesondere einem Kettenblattträger, koppelbar ist;
wobei die Hohlwelle (110) zwischen dem ersten und dem zweiten axialen Endbereich (111, 112) wenigstens einen magnetisierten Bereich (131, 132) aufweist, **dadurch gekennzeichnet, dass**
die Hohlwelle (110) an einem zweiten axialen Endbereich (112) stirnseitige Zähne (120) aufweist, die zum Eingriff mit Nuten (240) einer Tretlagerwelle (200) vorgesehen sind.

2. Tretlagerhülse nach Anspruch 1, wobei die Zähne in axialer Richtung der Hohlwelle ausgebildet sind, insbesondere über eine gesamte Wandstärke der Hohlwelle an dem zweiten axialen Endbereich des Hohlzylinders.

3. Tretlagerhülse nach Anspruch 1 oder 2, wobei jeder der Zähne der Tretlagerhülse einen abgerundeten Zahnfuß (122) und/oder einen abgerundeten Zahnkopf (121) aufweist.

4. Tretlagerhülse nach einem der Ansprüche 1 bis 3, wobei jeder der Zähne Zahnseiten (123) aufweist, die wenigstens teilweise parallel verlaufen.

5. Tretlagerhülse nach einem der Ansprüche 1 bis 4, wobei der wenigstens eine magnetisierte Bereich der Hohlwelle in Umfangsrichtung magnetisiert ist, wobei vorzugsweise zwei magnetisierte Bereiche (131, 132) vorgesehen sind, die in zueinander gegenläufiger Umfangsrichtung magnetisiert sind.

6. Tretlagerhülse nach einem der Ansprüche 1 bis 5, weiterhin umfassend:
eine Tretlagerabdeckung (350), die die Tretlagerhülse wenigstens teilweise umschließt und die für jeden magnetisierten Bereich wenigstens einen Magnetfeldsensor (331, 332) umfasst, mit dem eine durch ein an der Tretlagerhülse anliegendes Drehmoment bewirkte Magnetfeldänderung beabstandet vom jeweiligen magnetisierten Bereich der Hohlwelle erfasst werden kann.

7. Tretlagerhülse nach Anspruch 6, wobei der wenigstens eine Magnetfeldsensor an einer Innenseite des Tretlagergehäuses angeordnet ist.

8. Drehmomentsensor-Tretlager (300), umfassend:
eine Tretlagerhülse (100) nach einem der Ansprüche 1 bis 7; und
eine Tretlagerwelle (200), umfassend:
einen ersten axialen Endbereich (210) zur Befestigung einer ersten Tretkurbel und einen zweiten axialen Endbereich (220) zur Befestigung einer zweiten Tretkurbel; und
einen um eine Drehachse der Tretlagerwelle umlaufenden Wellenabsatz (230) mit erhöhtem Durchmesser und darin vorgesehenen Nuten (240) in axialer Richtung; und
wobei die Zähne (120) der Tretlagerhülse (100) in die Nuten (240) der Tretlagerwelle (200) eingreifen.

9. Drehmomentsensor-Tretlager nach Anspruch 8, wobei die Nuten in einer radialen Richtung über den gesamten Wellenabsatz ausgebildet sind.

10. Drehmomentsensor-Tretlager nach Anspruch 8 oder 9, wobei jede der Nuten Nutseiten aufweisen, die wenigstens teilweise parallel verlaufen.

11. Drehmomentsensor-Tretlager nach einem der Ansprüche 8 bis 10, wobei jede Nut der Tretlagerwelle und jeder Zahn der Tretlagerhülse wenigstens teilweise komplementär zueinander ausgebildet sind.

12. Drehmomentsensor-Tretlager nach einem der Ansprüche 8 bis 11, wobei die Zähne der Tretlagerhülse und die Nuten der Tretlagerwelle so ausgebildet sind, dass ein axialer Kontakt der Zähne und Nuten an Zahnfüßen der Messhülse erfolgt.

13. Drehmomentsensor-Tretlager nach einem der Ansprüche 8 bis 12, wobei eine axiale Länge der Zähne der Tretlagerhülse kleiner ist als eine axiale Tiefe der Nuten der Tretlagerwelle.

14. Drehmomentsensor-Tretlager nach einem der Ansprüche 8 bis 13, wobei eine Wandstärke der Hohlwelle der Tretlagerhülse an dem zweiten axialen Endbereich der Hohlwelle gleich einer radialen Höhe des Wellenabsatzes der Tretlagerwelle ist.

## Claims

1. A bottom bracket shell (100) for a bottom bracket with torque sensor;
wherein the bottom bracket shell comprises a hollow shaft (110) and the bottom bracket shell can be coupled to an output device, in particular a chainring carrier, at a first axial end region (111) of the hollow shaft;
wherein the hollow shaft (110) has at least one magnetized region (131, 132) between the first and second axial end regions (111, 112), **characterized in that**
the hollow shaft (110) includes at a second axial end region (112) end teeth (120) which are adapted for engagement with grooves (240) of a bottom bracket shaft (200).

2. The bottom bracket shell according to claim 1, wherein the teeth are formed in the axial direction of the hollow shaft, in particular through an entire wall thickness of the hollow shaft at the second axial end region of the hollow cylinder.

3. The bottom bracket shell according to claim 1 or 2, wherein each of the teeth of the bottom bracket shell includes a rounded tooth root (122) and/or a rounded tooth tip (121).

4. The bottom bracket shell according to any one of claims 1 to 3, wherein each of the teeth has tooth side faces (123) extending at least partially parallel.

5. The bottom bracket shell according to any one of claims 1 to 4, wherein the at least one magnetized region of the hollow shaft is magnetized in the circumferential direction, wherein preferably two magnetized regions (131, 132) are provided which are magnetized in mutually opposite circumferential directions.

6. The bottom bracket shell according to any one of claims 1 to 5, further comprising:
a bottom bracket cover (350) which at least partially encloses the bottom bracket shell and which comprises at least one magnetic field sensor (331, 332) for each magnetized region, with which a magnetic field change caused by a torque applied to the bottom bracket shell can be detected at a distance from the respective magnetized region of the hollow shaft.

7. The bottom bracket shell according to claim 6, wherein the at least one magnetic field sensor is disposed at an inner surface of the bottom bracket shell.

8. A bottom bracket (300) with torque sensor, comprising:
a bottom bracket shell (100) according to any one of claims 1 to 7; and
a bottom bracket shaft (200) comprising:
a first axial end portion (210) for mounting a first pedal crank and a second axial end portion (220) for mounting a second pedal crank; and
a shaft shoulder (230) with increased diameter extending around an axis of rotation of the bottom bracket shaft and having grooves (240) provided therein in the axial direction; and
wherein the teeth (120) of the bottom bracket shell (100) engage in the grooves (240) of the bottom bracket shaft (200).

9. The bottom bracket with torque sensor according to claim 8, wherein the grooves are formed in a radial direction throughout the shaft shoulder.

10. The bottom bracket with torque sensor according to claims 8 or 9, wherein each of the grooves have groove side faces extending at least partially parallel.

11. The bottom bracket with torque sensor according to any one of claims 8 to 10, wherein each groove of the bottom bracket shaft and each tooth of the bottom bracket shell are formed at least partially complementary to each other.

12. The bottom bracket with torque sensor according to any one of claims 8 to 11, wherein the teeth of the bottom bracket shell and the grooves of the bottom bracket shaft are formed such that the teeth and the grooves are in axial contact at tooth roots of the measuring sleeve.

13. The bottom bracket with torque sensor according to any one of claims 8 to 12, wherein an axial length of the teeth of the bottom bracket shell is smaller than an axial depth of the grooves of the bottom bracket shaft.

14. The bottom bracket with torque sensor according to any one of claims 8 to 13, wherein a wall thickness of the hollow shaft of the bottom bracket shell at the second axial end portion of the hollow shaft is equal to a radial height of the shaft shoulder of the bottom bracket shaft.

## Revendications

1. Boîtier de pédalier (100) pour un pédalier à capteur de couple ;
dans lequel le boîtier de pédalier comprend un arbre creux (110) et le boîtier de pédalier peut être couplé au niveau d'une première région d'extrémité axiale (111) de l'arbre creux à un dispositif de sortie, en particulier à un support de plateau ;
dans lequel l'arbre creux (110) comprend au moins une région magnétisée (131, 132) entre les première et seconde régions d'extrémité axiales (111, 112), **caractérisé en ce que**
l'arbre creux (110) présente, au niveau d'une seconde région d'extrémité axiale (112), des dents (120) situées côté extrémité qui sont prévues pour venir en prise avec des crans (240) d'un arbre de pédalier (200).

2. Boîtier de pédalier selon la revendication 1, dans lequel les dents sont réalisées dans la direction axiale de l'arbre creux, en particulier sur toute l'épaisseur de paroi de l'arbre creux au niveau de la seconde région d'extrémité axiale du cylindre creux.

3. Boîtier de pédalier selon la revendication 1 ou 2, dans lequel chacune des dents du boîtier de pédalier présente une base de dent (122) arrondie et/ou une tête de dent (121) arrondie.

4. Boîtier de pédalier selon l'une quelconque des revendications 1 à 3, dans lequel chacune des dents présente des côtés de dent (123) qui sont au moins partiellement parallèles.

5. Boîtier de pédalier selon l'une quelconque des revendications 1 à 4, dans lequel la au moins une région magnétisée de l'arbre creux est magnétisée dans la direction circonférentielle, dans lequel de manière préférée deux régions magnétisées (131, 132) sont prévues, qui sont magnétisées dans la direction circonférentielle en sens inverse l'une de l'autre.

6. Boîtier de pédalier selon l'une quelconque des revendications 1 à 5, comprenant en outre :
un couvercle de pédalier (350) qui entoure au moins partiellement le boîtier de pédalier et qui comprend pour chaque région magnétisée au moins un capteur de champ magnétique (331, 332) grâce auquel une modification de champ magnétique provoquée par un couple appliqué au boîtier de pédalier peut être détectée à distance de la région magnétisée respective de l'arbre creux.

7. Boîtier de pédalier selon la revendication 6, dans lequel le au moins un capteur de champ magnétique est agencé sur un côté intérieur du boîtier de pédalier.

8. Pédalier à capteur de couple (300), comprenant :
un boîtier de pédalier (100) selon l'une quelconque des revendications 1 à 7 ; et
un arbre de pédalier (200), comprenant :
une première région d'extrémité axiale (210) permettant de fixer une première manivelle de pédale et une seconde région d'extrémité axiale (220) permettant de fixer une seconde manivelle de pédale ; et
un épaulement d'arbre (230) de diamètre accru entourant l'axe de rotation de l'arbre de pédalier et comprenant des crans (240) dans la direction axiale ; et
dans lequel les dents (120) du boîtier de pédalier (100) viennent en prise dans les crans (240) de l'arbre de pédalier (200).

9. Pédalier à capteur de couple selon la revendication 8, dans lequel les crans sont réalisés dans une direction radiale sur la totalité de l'épaulement d'arbre.

10. Pédalier à capteur de couple selon la revendication 8 ou 9, dans lequel chacun des crans présente des côtés de cran qui sont au moins partiellement parallèles.

11. Pédalier à capteur de couple selon l'une quelconque des revendications 8 à 10, dans lequel chaque cran de l'arbre de pédalier et chaque dent du boîtier de pédalier sont réalisés de manière au moins partiellement complémentaire l'un par rapport à l'autre.

12. Pédalier à capteur de couple selon l'une quelconque des revendications 8 à 11, dans lequel les dents du boîtier de pédalier et les crans de l'arbre de pédalier sont réalisés de sorte qu'un contact axial des dents et des crans intervient au niveau des bases de dent du boîtier de mesure.

13. Pédalier à capteur de couple selon l'une quelconque des revendications 8 à 12, dans lequel une longueur axiale des dents du boîtier de pédalier est inférieure à une profondeur axiale des crans de l'arbre de pédalier.

14. Pédalier à capteur de couple selon l'une quelconque des revendications 8 à 13, dans lequel une épaisseur de paroi de l'arbre creux du boîtier de pédalier au niveau de la seconde région d'extrémité axiale de l'arbre creux est égale à une hauteur radiale de l'épaulement d'arbre de l'arbre de pédalier.
